# EUROPEAN PATENT SPECIFICATION

(11) **EP 3 118 914 B1**
(45) Date of publication and mention of the grant of the patent: **19.06.2019**
(21) Application number: 16179943.2
(22) Date of filing: 18.07.2016
(51) Int. Cl.: H01M 2/26, B23K 20/10, H01R 13/504, B23K 20/00, B23K 20/233, H01M 10/04, H01R 43/02, B23K 101/36, B23K 103/10, B23K 103/12, B23K 103/18

(54) **METHOD OF MANUFACTURING SECONDARY BATTERY**
VERFAHREN ZUR HERSTELLUNG EINER SEKUNDÄRBATTERIE
PROCÉDÉ DE FABRICATION DE BATTERIE SECONDAIRE

(30) Priority: 16.07.2015 KR 20150101108
(43) Date of publication of application: 18.01.2017
(73) Proprietor: Samsung SDI Co., Ltd., Giheung-gu Yongin-si, Gyeonggi-do 17084 (KR)
(72) Inventor: KIM, Taegon, Gyeonggi-do (KR); KIM, Joonsup, Gyeonggi-do (KR); BYUN, Inseop, Gyeonggi-do (KR); LIM, Youngchang, Gyeonggi-do (KR); KIM, Hyewon, Gyeonggi-do (KR); LEE, Jeawoan, Gyeonggi-do (KR); CHOI, Wanuk, Gyeonggi-do (KR)
(74) Representative: Mounteney, Simon James

(56) References cited:
- US-A1- 2011 070 477
- US-A1- 2013 011 717
- US-A1- 2014 147 716
- US-A1- 2014 299 652

## Description

### BACKGROUND

### 1. Field

One or more embodiments of the present invention relate to a secondary battery and a method of manufacturing a secondary battery.

### 2. Description of the Related Art

Secondary batteries are used in various industrial fields, owing to their many advantages. For example, secondary batteries are widely used as energy sources for mobile electronic devices, such as digital cameras, cellular phones, and laptop computers, as well as energy sources for hybrid electric vehicles in order to solve problems, such as air pollution caused by internal combustion engine vehicles using fossil fuels, such as gasoline and diesel oil. US20140299652 and US20110070477 disclose a method of ultrasonic welding tabs on battery electrodes.

### SUMMARY

One or more embodiments of the present invention set out to provide a method of manufacturing a secondary battery including different materials from each other are ultrasonic-welded under different process that seeks to reduce or prevent occurrences of first and second electrode tabs of the secondary battery being damaged and to ensure a high degree of coupling strength.

Aspects of the invention will be set forth, in part, in the description which follows and, in part, will be apparent from the description or may be learned by practice of the presented embodiments.

According to one or more embodiments of the present invention, a method of manufacturing a secondary battery includes: ultrasonic-welding a first electrode plate of an electrode assembly and a first electrode tab to each other by using a first horn including a first protruding tip; ultrasonic-welding a second electrode plate of the electrode assembly and a second electrode tab to each other by using a second horn including a second protruding tip, the second protruding tip having a positioning direction relative to a vibrating direction different from a positioning direction relative to a vibrating direction of the first protruding tip; and preparing the electrode assembly by arranging a separator between the first and second electrode plates.

The positioning direction of the first protruding tip may be substantially parallel to a vibrating direction of the ultrasonic-welding, and the positioning direction of the second protruding tip may form an angle with the vibrating direction of the ultrasonic-welding.

The positioning direction of the first protruding tip may be at an angle of about -5 degrees to about +5 degrees with respect to the vibrating direction, and the angle of the positioning direction of the second protruding tip with respect to the vibrating direction may be about 40 degrees to about 50 degrees.

The positioning direction of the first protruding tip may be at an angle of about 0 degrees with respect to the vibrating direction, and the angle of the positioning direction of the second protruding tip with respect to the vibrating direction may be about 45 degrees.

The first protruding tip and the second protruding tip may each have a polygonal cross-section, the positioning direction of the first protruding tip may be a facing direction of a side of the first protruding tip that makes a smallest angle with the vibrating direction, and the positioning direction of the second protruding tip may be a facing direction of a side of the second protruding tip that makes a smallest angle with the vibrating direction.

The first and second electrode tabs may include different materials from each other.

The first electrode tab may include aluminum, and the second electrode tab may include copper or nickel.

A number N of main vibrating contact sides of the first protruding tip may be less than a number M of main vibrating contact sides of the second protruding tip.

Each of the first and second protruding tips may have a quadrangular cross-section having four sides, the first protruding tip may have two main vibrating contact sides of the four sides thereof, and the second protruding tip may have four main vibrating contact sides of the four sides thereof.

Each of the first and second protruding tips may have a quadrangular pyramid shape having a quadrangular base.

The first horn may have a concave-convex surface on which a plurality of the first protruding tips are arranged, and the second horn may have a concave-convex surface on which a plurality of the second protruding tips are arranged.

An arrangement density of the first protruding tips on the first horn may be different from an arrangement density of the second protruding tips on the second horn.

The first protruding tips may be arranged having a first pitch, and the second protruding tips may be arranged having a second pitch, the first pitch being less than the second pitch.

The first protruding tips may have a different size from the second protruding tips.

The first protruding tips may be smaller than the second protruding tips.

### BRIEF DESCRIPTION OF THE DRAWINGS

These and/or other aspects of the invention will become apparent and more readily appreciated from the following description of embodiments thereof, taken in conjunction with the accompanying drawings in which:
FIG. 1 is an exploded perspective view illustrating a secondary battery according to an exemplary embodiment of the present invention;
FIG. 2 is a perspective view illustrating an unwound state of an electrode assembly depicted in FIG. 1;
FIG. 3 is a schematic view illustrating a first ultrasonic welding process for joining a first electrode tab to a first electrode plate;
FIG. 4 is a perspective view illustrating first protruding tips of a first horn depicted in FIG. 3;
FIGS. 5 and 6 are views illustrating a relationship between the vibrating direction of ultrasonic welding and a positioning direction of the first protruding tips;
FIG. 7 is a schematic view illustrating a second ultrasonic welding process for joining a second electrode tab to a second electrode plate;
FIG. 8 is a perspective view illustrating second protruding tips of a second horn depicted in FIG. 7;
FIGS. 9 and 10 are views illustrating a relationship between the vibrating direction of the ultrasonic welding and a positioning direction of the second protruding tips; and
FIGS. 11 and 12 are views illustrating arrangements of first and second protruding tips of first and second horns according to another embodiment of the present invention.

### DETAILED DESCRIPTION

Reference will now be made in detail to embodiments of the present invention, examples of which are illustrated in the accompanying drawings, wherein like reference numerals refer to like elements throughout. In this regard, the present exemplary embodiments may have different forms and should not be construed as being limited to the descriptions set forth herein. Accordingly, embodiments are merely described below, by referring to the figures, to explain aspects of the present description. As used herein, the term "and/or" includes any and all combinations of one or more of the associated listed elements and/or features. Expressions, such as "at least one of," when preceding a list of elements, modify the entire list of elements and do not modify the individual elements of the list.

It will be understood that when an element or layer is referred to as being "on," "connected to," or "coupled to" another element or layer, it may be directly on, connected, or coupled to the other element or layer or one or more intervening elements or layers may also be present. When an element is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. Further, the use of "may" when describing embodiments of the present invention relates to "one or more embodiments of the present invention." Also, the term "exemplary" is intended to refer to an example or illustration. As used herein, the terms "use," "using," and "used" may be considered synonymous with the terms "utilize," "utilizing," and "utilized," respectively.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments. In the figures, dimensions of the various elements, layers, etc. may be exaggerated for clarity of illustration.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing particular example embodiments of the present invention and is not intended to be limiting of the described example embodiments of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a secondary battery and a method of manufacturing a secondary battery will be described with reference to the accompanying drawings, in which embodiments of the present invention are shown.

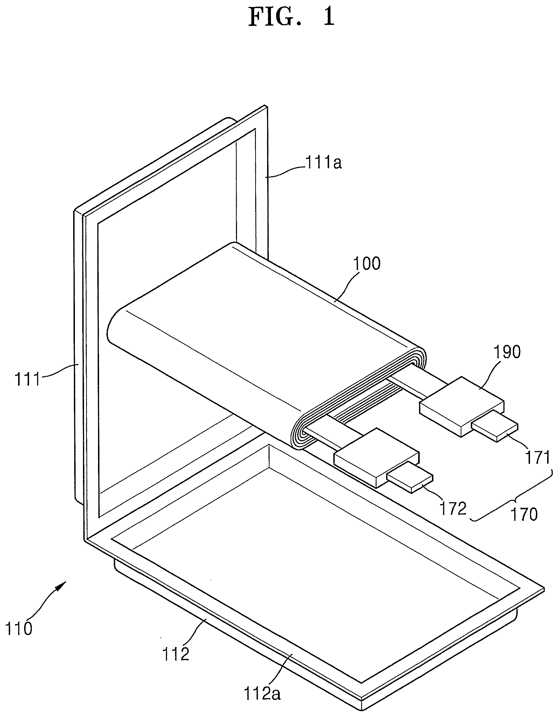

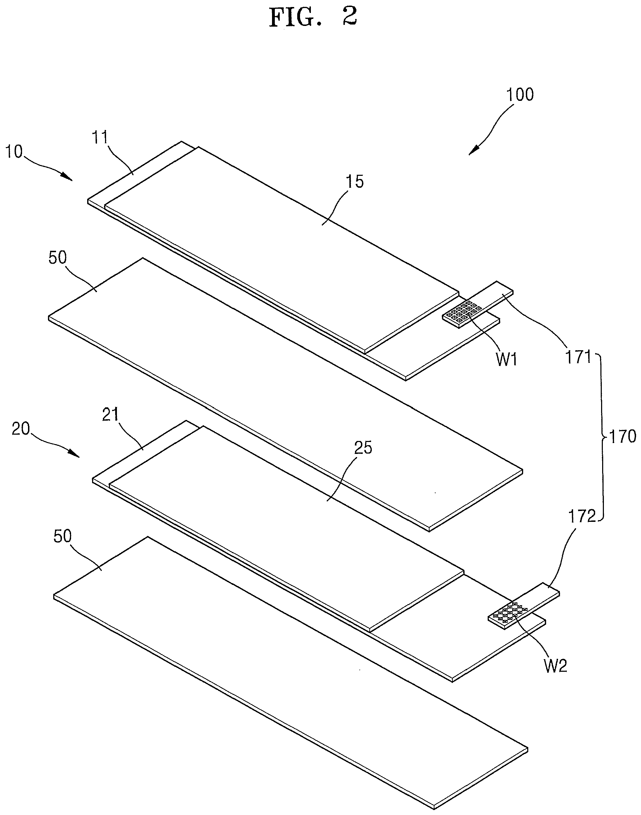

FIG. 1 is an exploded perspective view illustrating a secondary battery according to an embodiment of the present invention. FIG. 2 is a perspective view illustrating an unwound state of an electrode assembly depicted in FIG. 1.

Referring to FIG. 1, the secondary battery includes an electrode assembly 100, electrode tabs 170 electrically connected to the electrode assembly 100 and extending from the electrode assembly 100, and a case 110 accommodating the electrode assembly 100. The case 110 may include a first case 111 and a second case 112, and the first and second cases 111 and 112 may be joined together in mutually facing directions with the electrode assembly 100 being disposed therebetween. The first and second cases 111 and 112 may include (e.g., may be sealed to each other at) sealing parts 111a and 112a, and insulation tapes 190 may be attached to the electrode tabs 170 extending from the electrode assembly 100 so as to insulate the electrode tabs 170 from the sealing parts 111a and 112a.

Referring to FIG. 2, the electrode assembly 100 may be a jelly-roll type electrode assembly formed by disposing a separator 50 between first and second electrode plates 10 and 20 and winding the first and second electrode plates 10 and 20 and the separator 50 in the form of a roll. In another exemplary embodiment, the electrode assembly 100 may be a stacked type electrode assembly in which first and second electrode plates 10 and 20 are sequentially stacked in a state in which separators 50 are disposed between the first and second electrode plates 10 and 20. In this embodiment, the capacity of the secondary battery may be increased by increasing the number of electrode plates, such as first and second electrode plates 10 and 20. In the present disclosure, the first and second electrode plates 10 and 20 may be collectively referred to as electrode plates 10 and 20.

The electrode plates 10 and 20 may be formed by applying active materials to surfaces of electrode collectors 11 and 21. Thus, the electrode plates 10 and 20 may include the electrode collectors 11 and 21 and active material layers 15 and 25 formed on one or both surfaces of the electrode collectors 11 and 21, respectively. For example, the first electrode plate 10 may be a positive electrode plate including a positive electrode collector 11 and a positive electrode active material layer 15 formed on at least one surface of the positive electrode collector 11. Similarly, the second electrode plate 20 may be a negative electrode plate including a negative electrode collector 21 and a negative electrode active material layer 25 formed on at least one surface of the negative electrode collector 21.

Non-coated portions of the electrode plates 10 and 20, on which the active material layers are not formed, may be located at edge portions of the electrode plates 10 and 20. The electrode tabs 170 may be electrically connected to the non-coated portions. For example, the electrode tabs 170 may include first and second electrode tabs 171 and 172 respectively electrically connected to the non-coated portions of the first and second electrode plates 10 and 20. In the present disclosure, the first and second electrode tabs 171 and 172 may be collectively referred to as electrode tabs 170. As will be further described later, the electrode tabs 170 may be coupled to the non-coated portions by an ultrasonic welding method.

The electrode tabs 170 may include a metallic material having a high degree of conductivity. For example, the first electrode tab 171 may include aluminum, and the second electrode tab 172 may include copper or nickel.

The electrode tabs 170 may be electrically connected to the electrode plates 10 and 20 at weld zones W1 and W2. The weld zones W1 and W2 may be formed by ultrasonic welding (e.g., the electrode tabs 170 may be coupled to the electrode plates 10 and 20 by ultrasonic welding). For example, in an ultrasonic welding process, the electrode plates 10 and 20 and the electrode tabs 170 may be disposed to overlap each other as base metals to be welded to each other and may be pressed between a horn and an anvil of a welding machine. In this state, high frequency ultrasonic vibrations may be applied so as to weld the electrode plates 10 and 20 and the electrode tabs 170 by vibration energy, such as frictional heat.

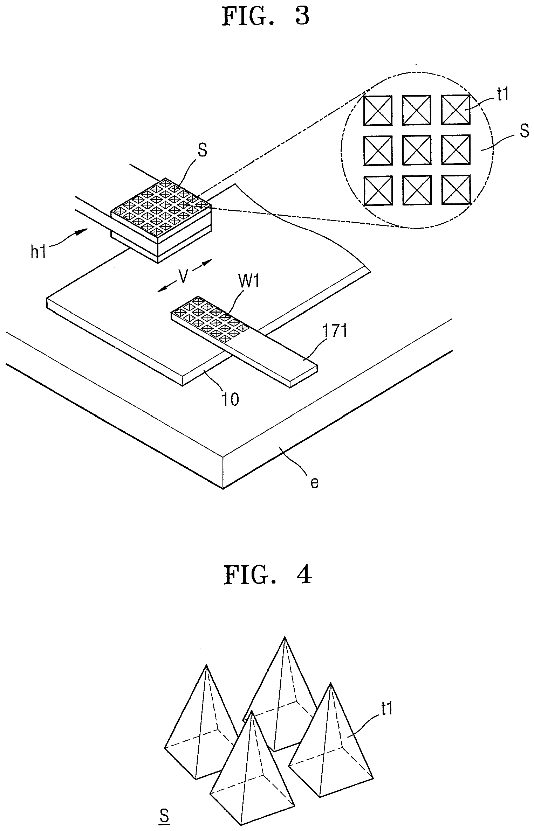

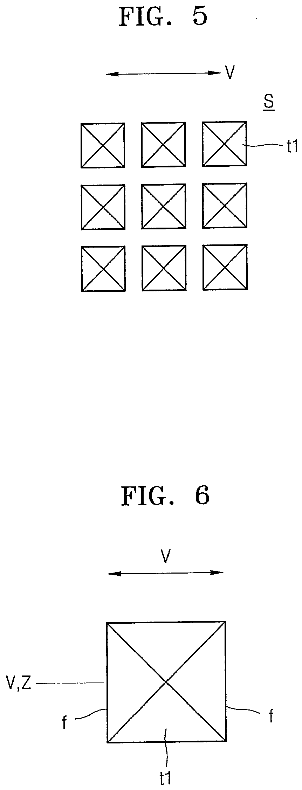

FIG. 3 is a schematic view illustrating a first ultrasonic welding process for joining the first electrode tab 171 to the first electrode plate 10. FIG. 4 is a perspective view illustrating a first horn h1 and first protruding tips t1. FIGS. 5 and 6 are views illustrating a relationship between a vibrating direction V and a positioning direction Z of the first protruding tips t1.

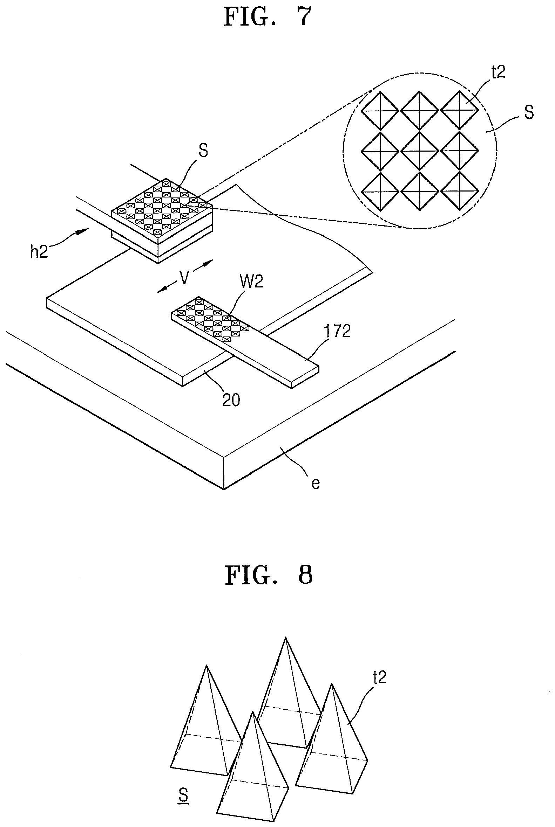

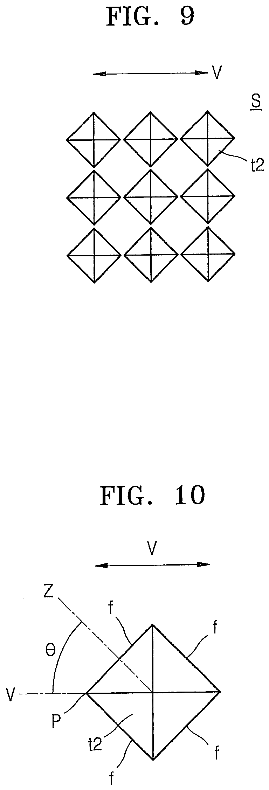

FIG. 7 is a schematic view illustrating a second ultrasonic welding process for joining the second electrode tab 172 to the second electrode plate 20. FIG. 8 is a perspective view illustrating a second horn h2 and second protruding tips t2. FIGS. 9 and 10 are views illustrating a relationship between the vibrating direction V and a positioning direction Z of the second protruding tips t2.

Referring to FIG. 3, in the first ultrasonic welding process, the first electrode plate 10 and the first electrode tab 171 (e.g., base metals 10 and 171 to be welded to each other) are disposed between the first horn h1 having a concave-convex surface S and an anvil (e) having a support surface facing the first horn h1, and in a state in which the first electrode plate 10 and the first electrode tab 171 are pressed between the first horn h1 and the anvil (e), ultrasonic vibrations are applied to the first electrode plate 10 and the first electrode tab 171. As shown in FIG. 3, the first horn h1 may include the first protruding tips t1 protruding toward the anvil (e). The first protruding tips t1 may be regularly arranged (e.g., arranged in a regular or repeating pattern) to form the concave-convex surface S of the first horn h1.

Referring to FIG. 4, each of the first protruding tips t1 may have a poly-pyramid shape. In an embodiment of the invention, the first protruding tips t1 may have a quadrangular pyramid shape having a quadrangular cross-section. However, the embodiments of the present invention are not limited thereto. For example, the first protruding tips t1 may have a different poly-pyramid shape, such as a triangular pyramid shape having a triangular cross-section or a pentagonal pyramid shape having a pentagonal cross-section.

For example, the cross-sectional shape of the first protruding tips t1 may be the same or substantially the same as the shape of bottom surfaces (e.g., the surfaces opposite to apexes) of the first protruding tips t1 facing the anvil (e). A cross-section of each of the first protruding tips t1 may have vibrating contact sides through which vibrations are applied to the first electrode tab 171 (e.g., sides of each of the first protruding tips t1 may be vibrating contact sides through which vibrations are applied to the first electrode tab 171). For example, in a state in which the apexes of the first protruding tips t1 are stuck into (e.g., pressed into or pressed against) the first electrode tab 171, the first electrode tab 171 may be vibrated by the vibrating contact sides of the first protruding tips t1.

Referring to FIGS. 5 and 6, each side of each of the first protruding tips t1 may not function as vibrating contact sides (f). For example, in one embodiment, each of the four sides of the quadrangular cross-section of each of the first protruding tips t1 may be vibrating contact sides (f) or, in other embodiments, only some of the four sides may be vibrating contact sides (f). This may vary according to an angle between the positioning direction Z of the first protruding tips t1 and the vibrating direction V of the ultrasonic welding. For example, in one embodiment, each of the four sides of the quadrangular cross-section of each of the first protruding tips t1 may function as vibrating contact sides (f) or, in other embodiments, only two of the four sides may function as vibrating contact sides (f).

Vibrating contact sides (f) (e.g., the sides of the first protruding tips t1 that function as vibrating contact sides (f)) are determined according to an angle between the positioning direction Z of the first protruding tips t1 and the vibrating direction V of the ultrasonic welding, and these vibrating contact sides (f) may be understood as being main vibrating contact sides (f) in consideration of tolerance. For example, there may be a difference between a set angle (e.g., a designed angle) and an actual angle (e.g., an angle as manufactured), and thus, the following description will be presented using the concept of main vibrating contact sides (f). For example, two sides of the quadrangular cross-section of each of the first protruding tips t1 that have a relatively high contact pressure may function as main vibrating contact sides (f).

In a state in which the first protruding tips t1 are pushed against the first electrode tab 171, the first protruding tips t1 may apply ultrasonic vibrations to the first electrode tab 171. When the ultrasonic vibrations are applied to the first electrode tab 171, main vibrating contact sides (f) of the first protruding tips t1 may vary according to the positioning direction Z of the first protruding tips t1 and the vibrating direction V of the ultrasonic welding. For example, main vibrating contact sides (f) of the first protruding tips t1 may vary according to the angle between the positioning direction Z of the first protruding tips t1 and the vibrating direction V of the ultrasonic welding, and the characteristics of the ultrasonic welding may vary according to the main vibrating contact sides (f).

Referring to FIG. 7, in the second ultrasonic welding process, the second electrode plate 20 and the second electrode tab 172 (e.g., base metals 20 and 172 to be welded to each other) may be disposed between the second horn h2 having a concave-convex surface S and an anvil (e) having a support surface facing the second horn h2, and in a state in which the second electrode plate 20 and the second electrode tab 172 are pressed between the second horn h2 and the anvil (e), ultrasonic vibrations may be applied to the second electrode plate 20 and the second electrode tab 172. As shown in FIG. 7, the second horn h2 may include the second protruding tips t2 protruding toward the anvil (e). The second protruding tips t2 may be regularly arranged (e.g., arranged in a regular or repeating pattern) so as to form the concave-convex surface S of the second horn h2.

Referring to FIG. 8, each of the second protruding tips t2 may have a poly-pyramid shape. In an exemplary embodiment, the second protruding tips t2 may have a quadrangular pyramid shape having a quadrangular cross-section. However, the exemplary embodiments of the present invention are not limited thereto. For example, the second protruding tips t2 may have a different poly-pyramid shape, such as a triangular pyramid shape having a triangular cross-section or a pentagonal pyramid shape having a pentagonal cross-section.

For example, the cross-sectional shape of the second protruding tips t2 may be the same or substantially the same as the shape of bottom surfaces (e.g., surface opposite to apexes) of the second protruding tips t2 facing the anvil (e). Each of the second protruding tips t2 may have vibrating contact sides through which vibrations are applied to the second electrode tab 172. For example, in a state in which the apexes of the second protruding tips t2 are stuck into (e.g., pressed into or pressed against) the second electrode tab 172, the second electrode tab 172 may be vibrated by contact sides (e.g., cross-sectional sides) of the second protruding tips t2.

Referring to FIGS. 9 and 10, each side of the cross-section of each of the second protruding tips t2 may function as vibrating contact sides (f). This may vary according to an angle between the positioning direction Z of the second protruding tips t2 and the vibrating direction V of the ultrasonic welding. For example, in one embodiment, each the four sides of the quadrangular cross-section of each of the second protruding tips t2 may function as vibrating contact sides (f) or, in other embodiments, only two of the four sides may function as vibrating contact sides (f). Vibrating contact sides (f) vary according to the angle between the positioning direction Z of the second protruding tips t2 and the vibrating direction V of the ultrasonic welding, and the vibrating contact sides (f) may be understood as main vibrating contact sides (f) in consideration of tolerance. For example, there may be a difference between a set angle and an actual angle, and thus, the following description will be presented using the concept of main vibrating contact sides (f). For example, each of the four sides of the quadrangular cross-section of each of the second protruding tips t2 may function as main vibrating contact sides (f).

In a state in which the second protruding tips t2 are pushed against the second electrode tab 172, the second protruding tips t2 may apply ultrasonic vibrations to the second electrode tab 172. As the second protruding tips t2 apply ultrasonic vibrations to the second electrode tab 172, main vibrating contact sides (f) of the second protruding tips t2 may vary according to the positioning direction Z of the second protruding tips t2 and the vibrating direction V of the ultrasonic welding. For example, main vibrating contact sides (f) of the second protruding tips t2 may vary according to the angle between the positioning direction Z of the second protruding tips t2 and the vibrating direction V of the ultrasonic welding, and the characteristics of ultrasonic welding may vary according to the main vibrating contact sides (f). In the present disclosure, the first and second protruding tips t1 and t2 may be collectively referred to as protruding tips t1 and t2.

Referring to FIGS. 6 and 10, different main vibrating contact sides (f) are used when the first and second electrode tabs 171 and 172 are ultrasonic-welded. For example, the angle between the positioning direction Z of the first protruding tips t1 and the vibrating direction V of the ultrasonic welding may be different from the angle between the positioning direction Z of the second protruding tips t2 and the vibrating direction V of the ultrasonic welding.

In the following description, the same vibrating direction V of the ultrasonic welding may be used for (e.g., is set for) the first and second electrode tabs 171 and 172, and the positioning directions Z of the protruding tips t1 and t2 will be further described based on the same vibrating direction V. According to an exemplary embodiment, when the first and second electrode tabs 171 and 172 are ultrasonic-welded, the protruding tips t1 and t2, that is, cross-sectional edges of the protruding tips t1 and t2, are in (e.g., are arranged in or face) different directions with respect to the vibrating direction V.

In the present disclosure, a direction normal to a side of the cross-section of one of the protruding tips t1 or t2 is defined as a facing direction of the side of the cross-section. For example, when the protruding tips t1 and t2 have the quadrangular cross-sectional shape, the facing direction of cross-sectional sides of the protruding tips t1 or t2 may be defined as the positioning direction Z of the protruding tips t1 or t2. For example, one of the facing directions of the cross-sectional sides of the protruding tips t1 or t2 which is closest to the vibrating direction V of the ultrasonic welding, that is, which makes the smallest angle with the vibrating direction V, may be defined as the positioning direction Z of the protruding tips t1 or t2.

Referring to FIG. 6, when the first electrode tab 171 is ultrasonic-welded, the positioning direction Z of the first protruding tips t1 may be about 0 degrees with respect to the vibrating direction V of the ultrasonic welding. For example, the positioning direction Z of the first protruding tips t1 may be parallel to the vibrating direction V. In this embodiment, the angle between the positioning direction Z of the first protruding tips t1 and the vibrating direction V of ultrasonic welding may be (e.g., may be set to be) within a range of about -5 degrees to about +5 degrees in consideration of tolerance.

Referring to FIG. 10, when the second electrode tab 172 is ultrasonic-welded, the positioning direction Z of the second protruding tips t2 may be about 45 degrees with respect to the vibrating direction V of the ultrasonic welding. For example, the positioning direction Z of the second protruding tips t2 may not be parallel to (e.g., may form an angle with) the vibrating direction V of the ultrasonic welding. In this embodiment, the angle between the positioning direction Z of the second protruding tips t2 and the vibrating direction V of the ultrasonic welding may be set to be within a range of about 40 degrees to about 50 degrees in consideration of tolerance. When the first and second electrode tabs 171 and 172 are ultrasonic-welded, the positioning direction Z of the protruding tips t1 and t2 is set with respect to the vibrating direction V. For example, the vibrating direction V is set as an axis being at 0 degrees.

The first and second electrode tabs 171 and 172 may include different materials from each other. The first and second electrode tabs 171 and 172 respectively extend from the first and second electrode plates 10 and 20, and the first and second electrode tabs 171 and 172 may be formed of materials that are the same as or are similar to materials used to form the first and second electrode plates 10 and 20, respectively, to ensure coupling strength between the first and second electrode tabs 171 and 172 and the first and second electrode plates 10 and 20.

Process conditions of an ultrasonic welding process for the first and second electrode tabs 171 and 172 may be determined according to the properties of materials of the first and second electrode tabs 171 and 172. For example, when the first electrode tab 171 is formed of aluminum, the mechanical strength of the first electrode tab 171 may be relatively low, and thus, the first electrode tab 171 may be easily torn during an ultrasonic welding process. For example, when the first electrode tab 171 is formed of a material having a relatively low strength, an ultrasonic welding process may be performed which may reduce damage to the first electrode tab 171 in exchange for relatively reduced coupling strength between the first electrode tab 171 and the first electrode plate 10 (e.g., the ultrasonic welding process may be focused primarily on reducing damage to the first electrode tab 171 rather than the coupling strength between the first electrode tab 171 and the first electrode plate 10).

In this embodiment, when the first electrode tab 171 is ultrasonic-welded, the positioning direction Z of the first protruding tips t1 may be (e.g., may be set to be) parallel to the vibrating direction V of the ultrasonic welding (refer to FIG. 6). The main vibrating contact sides (f) of the first protruding tips t1 may include two sides (e.g., first and second vibrating contact sides (f)) of which the facing directions are parallel to the vibrating direction V. The other two sides of which the facing directions are perpendicular to the vibrating direction V may not be (e.g., may not function as) vibrating contact sides (f).

The first and second vibrating contact sides (f) may vibrate the first electrode tab 171 in the vibrating direction V. In this embodiment, because the first and second vibrating contact sides (f) do not have a sharp portion, the first electrode tab 171 may not be damaged or may be less damaged. Because only two sides of the four sides of each of cross sections of the first protruding tips t1 function as main vibrating contact sides (f), welding strength may be reduced to some degree. However, the first electrode tab 171 may be less damaged. For example, because the main vibrating contact sides (f) do not have a sharp portion, the first electrode tab 171 may not be torn.

Different than the first electrode tab 171, the second electrode tab 172 may be formed of copper or nickel. In this embodiment, although the second electrode tab 172 may have a sufficient degree of mechanical strength (e.g., may be sufficiently strong), it may be difficult to ensure a sufficient degree of coupling strength between the second electrode tab 172 and the second electrode plate 20 by ultrasonic-welding. For example, the second electrode tab 172 formed of a material having a relatively high degree of strength may be ultrasonic-welded in a way such that the coupling strength between the second electrode tab 172 and the second electrode plate 20 is increased.

For example, when the second electrode tab 172 is ultrasonic-welded, the positioning direction Z of the second protruding tips t2 may be (e.g., may be set at) an angle with respect to (e.g., may form an angle with or may be set to be not parallel with) the vibrating direction V of the ultrasonic welding. In this embodiment, each of the four sides of each of the cross-sections of the second protruding tips t2 may function as main vibrating contact sides (f).

For example, the four main vibrating contact sides (f) may vibrate the second electrode tab 172 in the vibrating direction V. In this embodiment, because each of the four cross-sectional sides of each of the second protruding tips t2 function as main vibrating contact sides (f), welding strength may be increased, and thus, the coupling strength between the second electrode tab 172 and the second electrode plate 20 may be improved. Because the second electrode tab 172 is formed of a material having relatively high mechanical strength, although four main vibrating contact sides (f) are used to increase the coupling strength between the second electrode tab 172 and the second electrode plate 20, the second electrode tab 172 may not be damaged or may be less damaged.

The four main vibrating contact sides (f) include sharp corners (p) (e.g., the second electrode tab 172 may be vibrated in contact with sharp corners (p)). Because the second electrode tab 172 is pressed by the sharp corners (p) in the vibrating direction V of the ultrasonic welding, a considerably greater pressure may be applied to the second electrode tab 172. For example, relatively high contact pressure may be applied to very small areas of the second electrode tab 172 by the sharp corners (P). However, because the second electrode tab 172 is formed of the material having relatively high mechanical strength, the second electrode tab 172 may not be damaged or may be less damaged even though relatively high contact pressure is applied to the second electrode tab 172. In addition, the coupling strength between the second electrode tab 172 and the second electrode plate 20 may be increased.

When the second electrode tab 172 is ultrasonic-welded, the positioning direction Z of the second protruding tips t2 may be (e.g., may be set to be) offset with respect to (e.g., may not be parallel to) the vibrating direction V of the ultrasonic welding. In this embodiment, each of the four cross-sectional sides of each of the second protruding tip t2 may function as a main vibrating contact side (f).

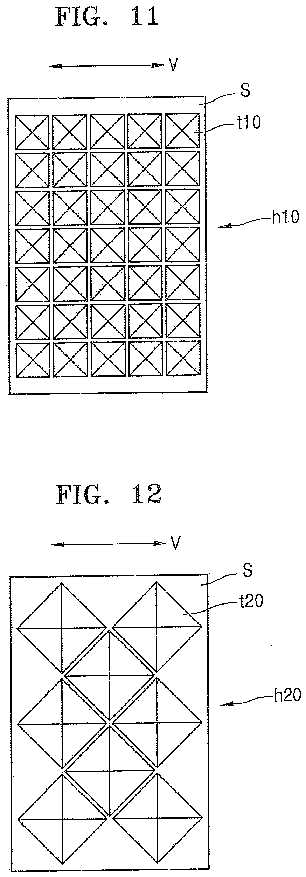

FIGS. 11 and 12 are views illustrating arrangements of first and second protruding tips t10 and t20 of first and second horns h10 and h20, respectively, according to another exemplary embodiment.

Referring to FIGS. 11 and 12, the first and second horns h10 and h20 may be used for ultrasonic welding of the first and second electrode tabs 171 and 172, and the first and second horns h10 and h20 may include concave-convex surfaces S on which the first and second protruding tips t10 and t20 are arranged, respectively. The first and second protruding tips t10 and t20 arranged on the concave-convex surfaces S of the first and second horns h10 and h20 may have different sizes and/or pitches from each other.

For example, the first protruding tips t10 may be densely arranged at relatively small intervals, and the second protruding tips t20 may be sparsely arranged at relatively large intervals. The size of each of the first protruding tips t10 may be smaller than the size of each of the second protruding tips t20. For example, the first protruding tips t10 having a relatively small size may be densely arranged, and the second protruding tips t20 having a relatively large size may be sparsely arranged.

The first and second electrode tabs 171 and 172 may be formed of different materials from each other. When the first electrode tab 171 is formed of aluminum having relatively low mechanical strength, an ultrasonic welding process performed on the first electrode tab 171 may focus on a method which may not damage or may only minimally damage the first electrode tab 171. In this embodiment, the first protruding tips t10 may have a relatively small size and may be densely arranged. For example, because the first protruding tips t1 are relatively small, the first electrode tab 171 may be less damaged when being vibrated by the first protruding tips t10. However, because the first protruding tips t10 are densely arranged, the first electrode tab 171 may be welded with a sufficient degree of welding strength.

When the second electrode tab 172 is formed of copper or nickel having relatively high mechanical strength, an ultrasonic welding process performed on the second electrode tab 172 may focus on coupling strength rather than on reducing damage to the second electrode tab 172. In this embodiment, the second protruding tips t20 may have a relatively large size and may be sparsely arranged. For example, because the second protruding tips t20 have a relatively large size, a sufficient degree of welding strength may be ensured when the second protruding tips t20 are not densely arranged. For example, the second protruding tips t20 may be arranged in a relatively sparse pattern by taking manufacturing costs into consideration. For example, when the second protruding tips t20 have a relatively large size, the second protruding tips t20 may be inserted into the second electrode tab 172 to a relatively deep depth with a relatively large contact area between the second protruding tips t20 and the second electrode tab 172. Therefore, a relatively large force may be applied to the second electrode tab 172, thereby ensuring a high degree of welding strength.

Referring to FIGS. 11 and 12, the positioning directions Z of the first and second protruding tips t10 and t20 relative to the vibrating direction V of the ultrasonic welding are different from each other. These orientations and arrangements are the same or are substantially the same as those described above, and thus, repeated description thereof may be omitted here.

Referring to FIGS. 11 and 12, both the size and pitch of the first protruding tips t10 are different from the size and pitch of the second protruding tips t20. However, in other exemplary embodiments, only the size or the pitch of the first protruding tips t10 may be different from the size or the pitch of the second protruding tips t20.

Hereinafter, a method of manufacturing a secondary battery will be described according to an embodiment of the invention.

Referring to FIGS. 1 and 2, the method may include: preparing an electrode assembly 100 including first and second electrode plates 10 and 20 and a separator 50 disposed between the first and second electrode plates 10 and 20; welding the first electrode plate 10 and a first electrode tab 171 to each other through a first ultrasonic welding process; and welding the second electrode plate 20 and a second electrode tab 172 to each other through a second ultrasonic welding process.

Referring to FIGS. 3 and 7, in the first ultrasonic welding process, the first electrode tab 171 is welded to the first electrode plate 10 using a first horn h1 including first protruding tips t1, and in the second ultrasonic welding process, the second electrode tab 172 is welded to the second electrode plate 20 using a second horn h2 including second protruding tips t2. The first horn h1 may include a concave-convex surface S on which the first protruding tips t1 are arranged, and the second horn h2 may include a concave-convex surface S on which the second protruding tips t2 are arranged. Referring to FIGS. 4 and 8, the first and second protruding tips t1 and t2 may each have a quadrangular pyramid shape having a quadrangular base.

Referring to FIGS. 6 and 10, in the first and second ultrasonic welding processes, the positioning directions Z of the first and second protruding tips t1 and t2 relative to a vibrating direction V of ultrasonic welding are different from each other. For example, the positioning direction Z of the first protruding tips t1 may be substantially parallel to the vibrating direction V of the ultrasonic welding, and the positioning direction Z of the second protruding tips t2 may form an angle with (e.g., may not be parallel to) the vibrating direction V of the ultrasonic welding.

The first and second electrode tabs 171 and 172 may include different materials. For example, the first electrode tab 171 may include aluminum, and the second electrode tab 172 may include copper or nickel.

Process conditions of the first and second ultrasonic welding processes may be determined according to the properties of the materials of the first and second electrode tabs 171 and 172. For example, when the first electrode tab 171 is formed of aluminum, the mechanical strength of the first electrode tab 171 may be relatively low, and thus, the first electrode tab 171 may be easily torn during an ultrasonic welding process. For example, when the first electrode tab 171 is formed of a relatively low strength material, the first ultrasonic welding process may be performed such that reducing damage to the first electrode tab 171 is a primary concern rather than the coupling strength between the first electrode tab 171 and the first electrode plate 10.

Different from the first electrode tab 171, the second electrode tab 172 may be formed of copper or nickel. In this embodiment, although the second electrode tab 172 may have a sufficient degree of mechanical strength, it may be difficult to ensure sufficient coupling strength between the second electrode tab 172 and the second electrode plate 20. For example, the second electrode tab 172 formed of the material having a relatively high degree of strength may be ultrasonic-welded such that the coupling strength between the second electrode tab 172 and the second electrode plate 20 is increased.

To this end, an angle between the positioning direction Z of the first protruding tips t1 and the vibrating direction V of the ultrasonic welding may be within (e.g., may be set to be within) a range of about -5 degrees to about +5 degrees, and an angle between the positioning direction Z of the second protruding tips t2 and the vibrating direction V of the ultrasonic welding may be within (e.g., may be set to be within) a range of about 40 degrees to about 50 degrees. For example, the angle between the positioning direction Z of the first protruding tips t1 and the vibrating direction V of the ultrasonic welding may be about 0 degrees, and the angle between the positioning direction Z of the second protruding tips t2 and the vibrating direction V of the ultrasonic welding may be about 45 degrees.

The positioning direction Z of the first protruding tips t1 may refer to one of the facing directions of the sides of the polygonal cross-sections of each of the first protruding tips t1 that makes the smallest angle with the vibrating direction V of the ultrasonic welding, and the positioning direction Z of the second protruding tips t2 may refer to one of the facing directions of the sides of the polygonal cross-sections of each of the second protruding tips t2 that makes the smallest angle with the vibrating direction V of the ultrasonic welding.

For example, a number N of main vibrating contact sides (f) of each of the first protruding tips t1 (e.g., of each of the polygonal cross-sections of the first protruding tips t1) may be less than a number M of main vibrating contact sides (f) of each of the second protruding tips t2 (e.g., of each of the polygonal cross-sections of the second protruding tips t2) (N<M). For example, according to the angle between the vibrating direction V and the positioning direction Z of the protruding tips t1 and t2, all four sides or only two sides of each of the quadrangular cross-sections of the protruding tips t1 and t2 may function as main vibrating contact sides (f). In the first ultrasonic welding process in which the first electrode tab 171 is ultrasonic-welded in which mechanical damage to the first electrode tab 171 is reduced, the first protruding tips t1 may each have two main vibrating contact sides (f) (N=2) (refer to FIG. 6). In the second ultrasonic welding process in which the second electrode tab 172 is ultrasonic-welded in which welding strength is increased, the second protruding tips t2 may each have four main vibrating contact sides (f) (M=4) (refer to FIG. 10).

Referring to FIGS. 11 and 12, in another method of manufacturing a secondary battery, first and second electrode tabs 171 and 172 may be ultrasonic-welded by using a first horn h10 including first protruding tips t10 and a second horn h20 including second protruding tips t20 having an arrangement density different from an arrangement density of the first protruding tips t10. For example, the first protruding tips t10 may be arranged with a relatively small pitch, and the second protruding tips t20 may be arranged with a relatively large pitch.

The first protruding tips t10 of the first horn h10 and the second protruding tips t20 of the second horn h20 having different sizes from each other may be used when the first and second electrode tabs 171 and 172 are ultrasonic-welded. For example, the first protruding tips t10 may be smaller than the second protruding tips t20.

The first and second electrode tabs 171 and 172 may be formed of different materials from each other. When the first electrode tab 171 is formed of aluminum having relatively low mechanical strength, an ultrasonic welding process may be performed on the first electrode tab 171 using a method in which damage to the first electrode tab 171 is reduced. To this end, the first protruding tips t10 may have a relatively small size and may be densely arranged.

When the second electrode tab 172 is formed of copper or nickel having relatively high mechanical strength, an ultrasonic welding process may be performed on the second electrode tab 172 in which coupling strength rather than reducing damage to the second electrode tab 172 is the primary focus. To this end, the second protruding tips t20 may have a relatively large size and may be sparsely arranged. For example, because the second protruding tips t20 have a relatively large size, a sufficient degree of welding strength may be ensured when the second protruding tips t20 are not densely arranged. For example, the second protruding tips t20 may be arranged in a relatively sparse pattern by taking manufacturing costs into consideration.

It should be understood that the embodiments of the invention described herein should be considered in a descriptive sense only and not for purposes of limitation. Descriptions of features or aspects within each embodiment should typically be considered as available for other similar features or aspects in other embodiments.

## Claims

1. A method of manufacturing a secondary battery, the method comprising:
ultrasonic-welding a first electrode plate (10) of an electrode assembly (100) and a first electrode tab (171) to each other by using a first horn (h1) comprising a first protruding tip (tl);
ultrasonic-welding a second electrode plate (20) of the electrode assembly (100) and a second electrode tab (172) to each other by using a second horn (h2) comprising a second protruding tip (t2), the second protruding tip (t2) having a positioning direction (Z) relative to a vibrating direction (V) different from a positioning direction relative to the vibrating direction (V) of the first protruding tip (tl); and
preparing the electrode assembly (100) by arranging a separator (50) between the first and second electrode plates.

2. A method according to claim 1, wherein the positioning direction (Z) of the first protruding tip (t1) is at an angle of from -5 degrees to +5 degrees with respect to the vibrating direction (V) of the ultrasonic-welding, and
the angle of the positioning direction of the second protruding tip (t2) with respect to the vibrating direction (V) of the ultrasonic-welding is from 40 degrees to 50 degrees.

3. A method according to claim 2, wherein the positioning direction (Z) of the first protruding tip (t1) is at an angle of 0 degrees with respect to the vibrating direction (V), and
the angle of the positioning direction of the second protruding tip with respect to the vibrating direction is about 45 degrees.

4. A method according to any preceding claim, wherein the first protruding tip (t1) and the second protruding tip (t2) each have a polygonal cross-section,
the positioning direction of the first protruding tip (t1) is a facing direction of a side of the first protruding tip that makes a smallest angle with a vibrating direction, and
the positioning direction of the second protruding tip (t2) is a facing direction of a side of the second protruding tip that makes a smallest angle with the vibrating direction.

5. A method according to any preceding claim, wherein the first and second electrode tabs comprise different materials from each other.

6. A method according to claim 6, wherein the first electrode tab comprises aluminum, and
the second electrode tab comprises copper or nickel.

7. A method according to any preceding claim, wherein a number N of main vibrating contact sides (f) of the first protruding tip (t1) is less than a number M of main vibrating contact sides of the second protruding tip.

8. A method according to claim 8, wherein each of the first and second protruding tips have a quadrangular cross-section having four sides,
the first protruding tip (tl)has two main vibrating contact sides of the four sides thereof, and
the second protruding tip (t2) has four main vibrating contact sides of the four sides thereof.

9. A method according to one of claims 1 to 7, wherein each of the first (t1) and second protruding tips (t2) has a quadrangular pyramid shape having a quadrangular base.

10. A method according to any preceding claim, wherein the first horn has a concave-convex surface on which a plurality of the first protruding tips are arranged, and
the second horn (h2) has a concave-convex surface on which a plurality of the second protruding tips (t2) are arranged.

11. A method according to claim 10, wherein an arrangement density of the first protruding tips (t1) on the first horn (h1) is different from an arrangement density of the second protruding tips (t2) on the second horn (h2).

12. A method according to claim 11, wherein the first protruding tips (t1) are arranged having a first pitch, and
the second protruding tips (t2) are arranged having a second pitch, the first pitch being less than the second pitch.

13. A method according to claim 10, 11 or 12, wherein the first protruding tips (t1) have a different size from the second protruding tips (t2).

14. A method according to claim 13, wherein the first protruding tips (t1) are smaller than the second protruding tips (t2).

## Patentansprüche

1. Verfahren zum Herstellen einer Sekundärbatterie, wobei das Verfahren umfasst:
Ultraschallschweißen einer ersten Elektrodenplatte (10) einer Elektrodenbaugruppe (100) und einer ersten Elektrodenkontaktfahne (171) miteinander unter Verwendung eines ersten Horns (h1), das eine erste vorstehende Spitze (t1) umfasst;
Ultraschallschweißen einer zweiten Elektrodenplatte (20) der Elektrodenbaugruppe (100) und einer zweiten Elektrodenkontaktfahne (172) miteinander unter Verwendung eines zweiten Horns (h2), das eine zweite vorstehende Spitze (t2) umfasst, wobei die zweite vorstehende Spitze (t2) eine Positionierrichtung (Z) in Bezug auf eine Vibrationsrichtung (V) aufweist, die sich von einer Positionierrichtung in Bezug auf die Vibrationsrichtung (V) der ersten vorstehenden Spitze (t1) unterscheidet; und
Anfertigen der Elektrodenbaugruppe (100) durch Anordnen eines Separators (50) zwischen der ersten und zweiten Elektrodenplatte.

2. Verfahren nach Anspruch 1, worin die Positionierrichtung (Z) der ersten vorstehenden Spitze (t1) in einem Winkel von -5 Grad bis +5 Grad in Bezug auf die Schwingungsrichtung (V) des Ultraschallschweißens liegt, und
der Winkel der Positionierrichtung der zweiten vorstehenden Spitze (t2) in Bezug auf die Schwingungsrichtung (V) des Ultraschallschweißens 40 Grad bis 50 Grad beträgt.

3. Verfahren nach Anspruch 2, worin die Positionierrichtung (Z) der ersten vorstehenden Spitze (t1) in einem Winkel von 0 Grad in Bezug auf die Schwingungsrichtung (V) liegt, und
der Winkel der Positionierrichtung der zweiten vorstehenden Spitze in Bezug auf die Schwingungsrichtung etwa 45 Grad beträgt.

4. Verfahren nach einem vorhergehenden Anspruch, worin die erste vorstehende Spitze (t1) und die zweite vorstehende Spitze (t2) jeweils einen vieleckigen Querschnitt aufweisen,
die Positionierrichtung der ersten vorstehenden Spitze (t1) eine zugewandte Richtung einer Seite der ersten vorstehenden Spitze ist, die einen kleinsten Winkel mit einer Schwingungsrichtung bildet, und
die Positionierrichtung der zweiten vorstehenden Spitze (t2) eine zugewandte Richtung einer Seite der zweiten vorstehenden Spitze ist, die einen kleinsten Winkel mit der Schwingungsrichtung bildet.

5. Verfahren nach einem vorhergehenden Anspruch, worin die erste und die zweite Elektrodenkontaktfahne voneinander verschiedene Materialien umfassen.

6. Verfahren nach Anspruch 5, worin die erste Elektrodenkontaktfahne Aluminium umfasst, und
die zweite Elektrodenkontaktfahne Kupfer oder Nickel umfasst.

7. Verfahren nach einem vorhergehenden Anspruch, worin eine Anzahl N von Hauptschwingungskontaktseiten (f) der ersten vorstehenden Spitze (t1) kleiner ist als eine Anzahl M von Hauptschwingungskontaktseiten der zweiten vorstehenden Spitze.

8. Verfahren nach Anspruch 7, worin jede der ersten und zweiten vorstehenden Spitzen einen viereckigen Querschnitt mit vier Seiten aufweist,
die erste vorstehende Spitze (t1) zwei Hauptschwingungskontaktseiten der vier Seiten derselben aufweist, und
die zweite vorstehende Spitze (t2) vier Hauptschwingungskontaktseiten der vier Seiten derselben aufweist.

9. Verfahren nach einem der Ansprüche 1 bis 7, worin jede der ersten (t1) und zweiten vorstehenden Spitzen (t2) eine viereckige Pyramidenform mit einer viereckigen Basis aufweist.

10. Verfahren nach einem vorhergehenden Anspruch, worin das erste Horn eine konkav-konvexe Oberfläche aufweist, auf der eine Vielzahl der ersten vorstehenden Spitzen angeordnet ist, und
das zweite Horn (h2) eine konkav-konvexe Oberfläche aufweist, auf der eine Vielzahl der zweiten vorstehenden Spitzen (t2) angeordnet ist.

11. Verfahren nach Anspruch 10, worin eine Anordnungsdichte der ersten vorstehenden Spitzen (t1) auf dem ersten Horn (h1) sich von einer Anordnungsdichte der zweiten vorstehenden Spitzen (t2) auf dem zweiten Horn (h2) unterscheidet.

12. Verfahren nach Anspruch 11, worin die ersten vorstehenden Spitzen (t1) in einem ersten Rastermaß angeordnet sind, und
die zweiten vorstehenden Spitzen (t2) in einem zweiten Rastermaß angeordnet sind, wobei das erste Rastermaß kleiner als das zweite Rastermaß ist.

13. Verfahren nach Anspruch 10, 11 oder 12, worin die ersten vorstehenden Spitzen (t1) eine andere Größe aufweisen als die zweiten vorstehenden Spitzen (t2).

14. Verfahren nach Anspruch 13, worin die ersten vorstehenden Spitzen (t1) kleiner sind als die zweiten vorstehenden Spitzen (t2).

## Revendications

1. Procédé de fabrication d'une batterie secondaire, le procédé comprenant :
le soudage par ultrasons d'une première plaque d'électrode (10) d'un ensemble d'électrodes (100) et d'une première languette d'électrode (171) l'une à l'autre en utilisant une première corne d'air de soudage (h1) qui comprend une première pointe en protubérance (t1) ;
le soudage par ultrasons d'une seconde plaque d'électrode (20) de l'ensemble d'électrodes (100) et d'une seconde languette d'électrode (172) l'une à l'autre en utilisant une seconde corne d'air de soudage (h2) qui comprend une seconde pointe en protubérance (t2), la seconde pointe en protubérance (t2) présentant une direction de positionnement (Z) par rapport à une direction de vibration (V) qui est différente d'une direction de positionnement par rapport à la direction de vibration (V) de la première pointe en protubérance (t1) ; et
la préparation de l'ensemble d'électrodes (100) en agençant un séparateur (50) entre les première et seconde plaques d'électrode.

2. Procédé selon la revendication 1, dans lequel la direction de positionnement (Z) de la première pointe en protubérance (t1) est selon un angle qui va de -5 degrés à +5 degrés par rapport à la direction de vibration (V) du soudage par ultrasons ; et
l'angle de la direction de positionnement de la seconde pointe en protubérance (t2) par rapport à la direction de vibration (V) du soudage par ultrasons va de 40 degrés à 50 degrés.

3. Procédé selon la revendication 2, dans lequel la direction de positionnement (Z) de la première pointe en protubérance (t1) est selon un angle de 0 degré par rapport à la direction de vibration (V) ; et
l'angle de la direction de positionnement de la seconde pointe en protubérance par rapport à la direction de vibration est d'environ 45 degrés.

4. Procédé selon l'une quelconque des revendications qui précèdent, dans lequel la première pointe en protubérance (t1) et la seconde pointe en protubérance (t2) présentent chacune une section en coupe transversale polygonale ;
la direction de positionnement de la première pointe en protubérance (t1) est une direction de vis-à-vis d'un côté de la première pointe en protubérance qui forme un angle le plus petit par rapport à une direction de vibration ; et
la direction de positionnement de la seconde pointe en protubérance (t2) est une direction de vis-à-vis d'un côté de la seconde pointe en protubérance qui forme un angle le plus petit par rapport à la direction de vibration.

5. Procédé selon l'une quelconque des revendications qui précèdent, dans lequel les première et seconde languettes d'électrode comprennent des matériaux qui sont différents l'un par rapport à l'autre.

6. Procédé selon la revendication 5, dans lequel la première languette d'électrode comprend de l'aluminium ; et
la seconde languette d'électrode comprend du cuivre ou du nickel.

7. Procédé selon l'une quelconque des revendications qui précèdent, dans lequel un nombre N de côtés de contact vibratoire principaux (f) de la première pointe en protubérance (t1) est inférieur à un nombre M de côtés de contact vibratoire principaux de la seconde pointe en protubérance.

8. Procédé selon la revendication 7, dans lequel chacune des première et seconde pointes en protubérance présente une section en coupe transversale quadrangulaire qui comporte quatre côtés ;
la première pointe en protubérance (t1) comporte deux côtés de contact vibratoire principaux parmi ses quatre côtés ; et
la seconde pointe en protubérance (t2) comporte quatre côtés de contact vibratoire principaux parmi ses quatre côtés.

9. Procédé selon l'une des revendications 1 à 7, dans lequel chacune des première (t1) et seconde (t2) pointes en protubérance présente une forme de pyramide quadrangulaire qui comporte une base quadrangulaire.

10. Procédé selon l'une quelconque des revendications qui précèdent, dans lequel la première corne d'air de soudage comporte une surface concave-convexe sur laquelle une pluralité des premières pointes en protubérance est agencée ; et
la seconde corne d'air de soudage (h2) comporte une surface concave-convexe sur laquelle une pluralité des secondes pointes en protubérance (t2) est agencée.

11. Procédé selon la revendication 10, dans lequel une densité d'agencement des premières pointes en protubérance (t1) sur la première corne d'air de soudage (h1) est différente d'une densité d'agencement des secondes pointes en protubérance (t2) sur la seconde corne d'air de soudage (h2).

12. Procédé selon la revendication 11, dans lequel les premières pointes en protubérance (t1) sont agencées de manière à présenter un premier pas ; et
les secondes pointes en protubérance (t2) sont agencées de manière à présenter un second pas, le premier pas étant plus petit que le second pas.

13. Procédé selon la revendication 10, 11 ou 12, dans lequel les premières pointes en protubérance (t1) présentent une taille différente de celle des secondes pointes en protubérance (t2).

14. Procédé selon la revendication 13, dans lequel les premières pointes en protubérance (t1) sont plus petites que les secondes pointes en protubérance (t2).
